(19)

Europäisches Patentamt
European Patent Office
Office européen des brevets

(11) **EP 3 369 567 A1**

(12) **EUROPEAN PATENT APPLICATION**
published in accordance with Art. 153(4) EPC

(43) Date of publication:
**05.09.2018 Bulletin 2018/36**

(21) Application number: **16859828.2**

(22) Date of filing: **26.10.2016**

(51) Int Cl.:
**B32B 5/18** (2006.01)     **B32B 27/20** (2006.01)
**H01M 2/16** (2006.01)

(86) International application number:
**PCT/JP2016/081689**

(87) International publication number:
**WO 2017/073598 (04.05.2017 Gazette 2017/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.10.2015  JP 2015214529**

(71) Applicants:
• **JNC Corporation**
**Chiyoda-ku**
**Tokyo 100-8105 (JP)**
• **JNC Petrochemical Corporation**
**Tokyo 100-0004 (JP)**

(72) Inventors:
• **SAKAMOTO, Kazuyuki**
**Ichihara-shi**
**Chiba 290-8551 (JP)**
• **FUKUDA, Hirokazu**
**Ichihara-shi**
**Chiba 290-8551 (JP)**
• **ENOKI, Nobuo**
**Ichihara-shi**
**Chiba 290-8551 (JP)**
• **ITOU, Shingo**
**Ichihara-shi**
**Chiba 290-8551 (JP)**

(74) Representative: **Thurston, Joanna**
**Withers & Rogers LLP**
**4 More London Riverside**
**London SE1 2AU (GB)**

(54) **ORGANIC-INORGANIC COMPOSITE MEMBRANE EXCELLENT IN SMOOTHNESS AND MULTI-LAYER HEAT RESISTANT SEPARATOR MATERIAL USING SAME**

(57)     Provided is an organic-inorganic composite membrane which is to be used for a multi-layer heat resistant separator material, and which achieves a fine balance among smoothness, preservation of microporous property of a substrate film, and adhesion between a substrate and a heat-resistant layer. This organic-inorganic composite membrane has, on at least one side of a substrate film comprising a polyolefin microporous membrane, a heat resistant layer including inorganic heat resistant particles and a binder that is soluble in an organic solvent, wherein the inorganic heat resistant particles includes small particles F(a) having an average particle diameter smaller than 0.2 $\mu$m and large particles F(b) having an average particle diameter not less than 0.2 $\mu$m.

EP 3 369 567 A1

## Description

## Technical Field

The invention relates to an organic-inorganic composite membrane, a production method therefor and a multilayer heat-resistant separator material using the organic-inorganic composite membrane.

## Background Art

As a microporous membrane being a material of a battery separator, a material prepared by forming a film formed of resin such as polyethylene and polypropylene into a microporous film by a method called a wet method or a dry method is used. An organic-inorganic composite membrane provided with a heat-resistant layer containing inorganic heat-resistant particles in a microporous membrane made of resin has been utilized as a multilayer heat-resistant separator material in association with recent growth of a demand for safety and heat resistance of a battery. Such a multilayer heat-resistant separator material contributes to improved safety of the battery by increased heat resistance. However, the multilayer heat-resistant separator material actually has a problem specific to the organic-inorganic composite membrane.

First, frictional resistance on a side of the heat-resistant layer increases. Specific examples of a factor of the increase in resistance include adhesion derived from an inorganic filler, and adhesion derived from a binder to metal. The increase in frictional resistance is to cause poor extraction after winding by adhesion to a center core, in preparing the battery, scraping by winding or polishing by excessive adhesion to a metallic roll, or dropping of the heat-resistant layer, and therefore adversely affects productivity of the battery.

Second, ion conductivity of a substrate film is possibly influenced by the heat-resistant layer. The heat-resistant layer is ordinarily formed by applying a heat-resistant layer agent containing the inorganic heat-resistant particles, the binder and a solvent to the substrate film, and drying and solidifying the resulting material. A form of space through the microporous membrane is possibly changed by permeation and adherence of the heat-resistant layer into a surface of the substrate film and a part of the surface. Accordingly, in the multilayer heat-resistant separator material containing the heat-resistant layer and the substrate film, excellent ion conductivity originally owned by the substrate film is possibly unable to be maintained.

Third, strong adhesion of the substrate film to the heat-resistant layer is difficult. The reason is that compatibility between the filler used as the inorganic heat-resistant particles, and the substrate film such as polyolefin is low. Then, in order to adhere the filler such as metal oxide to the substrate film such as polyolefin, a binder having moderate compatibility for both the inorganic heat-resistant particles and the substrate film is blended for the heat-resistant layer. However, mutual bonding force among the inorganic heat-resistant particles, the binder and the substrate film is limited. Moreover, the inorganic heat-resistant particles are required to be dispersed into the heat-resistant layer at a sufficient concentration in order to obtain high heat resistance, but uniform dispersion of a large amount of the inorganic heat-resistant particles into the binder is difficult. Therefore, strong adhesion between the binder containing the large amount of the inorganic heat-resistant particles, and the substrate film is limited.

The organic-inorganic composite membrane capable of overcoming all the problems described above, namely, the organic-inorganic composite membrane well-balanced and excellent in all of smoothness, maintenance of microporous characteristics of the substrate film, and adhesion between the substrate and the heat-resistant layer has not been obtained yet.

For example, Patent literature No. 1 describes use of a separator having a second porous layer formed of insulating particles as a production method for an electrochemical device excellent in safety at high temperature. Patent literature No. 1 describes to the effect that the device is prepared by winding porous layer (I) having a low coefficient of friction and composed mainly of a thermoplastic resin around a winding shaft in order to prevent poor extraction of the winding shaft in a step of spirally winding a positive electrode, a negative electrode and a separator therearound.

## Citation List

## Patent Literature

Patent literature No. 1: WO 2008/143005 A

## Summary of Invention

### Technical Problem

Patent literature No. 1 suggests that a composite membrane having a heat-resistant layer having a high coefficient of friction serves as a problem in production. Then, an objective of the invention is to provide an organic-inorganic composite membrane having smoothness, maintenance of microporous characteristics of a substrate film, and adhesion between a substrate and a heat-resistant layer in a well-balanced manner and for a multilayer heat-resistant separator material.

### Solution to Problem

The present inventors have diligently continued to conduct research, and as a result, have succeeded in selectively producing an organic-inorganic composite membrane excellent in the balance described above by containing inorganic heat-resistant particles having specific conditions in a heat-resistant layer.

More specifically, the invention is as described below.

Item 1. An organic-inorganic composite membrane having a heat-resistant layer containing inorganic heat-resistant particles and an organic solvent-soluble binder on at least one surface of a substrate film formed of a microporous membrane made of polyolefin, wherein the inorganic heat-resistant particles contain small particles F (a) having an average particle size less than 0.2 micrometer, and large particles F(b) having an average particle size of 0.2 micrometer or more.

Item 2. The organic-inorganic composite membrane according to item 1, wherein a weight fraction of large particles F(b) based on the total weight of the inorganic heat-resistant particles is 5% by weight or more and less than 50% by weight.

Item 3. The organic-inorganic composite membrane according to item 1 or 2, satisfying the following conditions (B) and conditions (C) :

$$\text{conditions (B): } 12.74 \leq b$$

wherein, b denotes peel strength (N) of a heat-resistant layer from a substrate film to be obtained according to the following measuring method:

the measuring method of peel strength b: operation is performed in the order of the following (1), (2), (3) and (4):

(1) a pressure sensitive adhesive double coated tape is pasted onto a heat-resistant layer of an organic-inorganic composite membrane;

(2) kraft paper is pasted ono a surface without adhesion with the heat-resistant layer of the pressure sensitive adhesive double coated tape;

(3) each end of the organic-inorganic composite membrane and the kraft paper is clamped with a chuck of a tensile tester; and

(4) the chuck is pulled away by using the tensile tester at a tensile rate of 500 millimeters per minute, and maximum stress (N) at causing interfacial peeling of the heat-resistant layer from the substrate film is taken as peel strength b; and

$$\text{conditions (C): } c \leq 20$$

wherein, c denotes an air-permeability change rate (%) to be determined by the following formula:

$$\text{air-permeability change rate (\%) = } |(\text{air permeability of organic-inorganic composite membrane}) - (\text{air permeability of substrate film})| / (\text{air permeability of substrate film}) \times 100.$$

Item 4. The organic-inorganic composite membrane according to any one of items 1 to 3, wherein the microporous membrane made of polyolefin is composed of a polymer obtained by polymerizing a monomer mainly composed of olefin.

Item 5. The organic-inorganic composite membrane according to item 5, wherein the polymer obtained by polymerizing the monomer mainly composed of olefin is a propylene homopolymer or a polymer obtained by copolymerizing propylene and at least one kind selected from ethylene and an α-olefin having 4 to 8 carbons and mainly composed of propylene.

Item 6. The organic-inorganic composite membrane according to any one of items 1 to 5, wherein the inorganic heat-resistant particles are at least one kind selected from silica, boehmite, alumina and titania.

Item 7. The organic-inorganic composite membrane according to any one of items 1 to 6, wherein the organic solvent-soluble binder is a fluorine-containing resin.

Item 8. A method for producing the organic-inorganic composite membrane according to any one of items 1 to 7, including a step of coating a heat-resistant layer agent containing inorganic heat-resistant particles and an organic solvent-soluble binder onto at least one surface of a substrate film formed of a microporous membrane made of polyolefin, and drying and solidifying the resulting material and providing a heat-resistant layer.

Item 9. A multilayer heat-resistant separator material, formed of the organic-inorganic composite membrane according to any one of items 1 to 7.

**Advantageous Effects of Invention**

An organic-inorganic composite membrane of the invention has high heat resistance and simultaneously is superior in smoothness of a heat-resistant layer to a conventional membrane. Furthermore, adhesion between a substrate film and the heat-resistant layer is high. Further, even in a state of adhesion of the substrate film to the heat-resistant layer, microporous characteristics of the substrate film are well maintained. An attempt has not been made so far on selectively producing such an organic-inorganic composite membrane, and even a use example of such an organic-inorganic composite membrane has not been found out, either. Therefore, the organic-inorganic composite membrane of the invention is new in having all of heat resistance, smoothness, adhesion between the substrate film and the heat-resistant layer, and maintenance of microporosity of the substrate film, and has an inventive step in having a new advantage that has not been applied as an object in the conventional product.

**Description of Embodiments**

An organic-inorganic composite membrane of the invention has features of having a heat-resistant layer containing inorganic heat-resistant particles and an organic solvent-soluble binder on at least one surface of a substrate film formed of a microporous membrane made of polyolefin, in which the inorganic heat-resistant particles contain small particles F(a) having an average particle size less than 0.2 micrometer, and large particles F(b) having an average particle size of 0.2 micrometer or more.

**Substrate film**

The substrate film used in the invention is the microporous membrane made of polyolefin. Polyolefin being a raw material of the substrate film used in the invention is preferably a polymer obtained by polymerizing a monomer mainly composed of olefin. Polyolefin may be a polymer prepared by polymerization of an olefin monomer only, or if the polyolefin is mainly composed of the olefin monomer, more specifically, contains the olefin monomer as a main component, polyolefin may be a polymer obtained by polymerization with containing any other monomer than the olefin monomer. Here, the main component means the monomer contained in an amount of 50% by weight or more based on the total weight of all the monomers constituting the polymer.

As the olefin monomer, a straight-chain olefin monomer having 2 to 10 carbons, or a branched-chain olefin monomer having 4 to 8 carbons, such as 2-methylpropene, 3-methyl-1-butene and 4-methyl-1-pentene can be used. As any other monomer, styrenes or dienes can be simultaneously used. A typified polyolefin is the polymer called polyethylene or polypropylene.

Polyethylene is the polymer containing ethylene as the main component, and specific examples include an ethylene homopolymer, and a polymer obtained by copolymerizing ethylene and at least one kind (comonomer) selected from an α-olefin having 3 to 8 carbons and containing ethylene as the main component. Polypropylene is the polymer containing propylene as the main component, and specific examples include a propylene homopolymer, and a polymer obtained by copolymerizing propylene and at least one kind (comonomer) selected from ethylene and an α-olefin having 4 to 8 carbons and containing propylene as the main component. A content of the comonomer described above may be in any range as long as the substrate film satisfies predetermined stretching conditions. In the invention, from a viewpoint of maintaining heat resistance at 150°C or higher, polyolefin is preferably a propylene homopolymer, or a polymer obtained by copolymerizing propylene and at least one kind selected from ethylene and an α-olefin having 4 to 8 carbons and containing propylene as the main component.

Polyolefin being the raw material of the substrate film used in the invention is preferably polypropylene having a high melting point and high crystallinity. Particularly preferred polypropylene is a polymer having a melt mass flow rate (MFR, measured under conditions in accordance with JIS K6758 (230°C, 21.18 N)) of 0.1 to 1.0 g/10 minutes and a melting point of 150 to 170°C, which may contain at least one kind arbitrarily selected from ethylene and an α-olefin having 4 to 8 carbons, and contains propylene as the main component.

A nucleating agent or an additive such as a filler can be blended in the polyolefin described above.

Specific examples of the filler include calcium carbonate, silica, hydrotalcite, zeolite, aluminum silicate and magnesium silicate.

A kind and an amount of the additive are not limited as long as the organic-inorganic composite membrane of the invention satisfies conditions (A), (B) and (C) described later.

**Production of substrate film**

The substrate film of the invention is preferably a microporous membrane made of polyolefin as produced according to a so-called dry method that is advantageous in a cost aspect because of no use of an organic solvent. Such a microporous membrane made of polyolefin is particularly preferably a microporous membrane produced according to a dry method including a film formation step, a heat treatment step, a cold stretching step, a hot stretching step and a relaxing step as described below, and having a porosity of 45% or more.

(Film formation step)

The film formation step is a step of extruding and shaping a raw material to form an original film. A raw material polyolefin is supplied to an extruder, and a raw material polyolefin is meld-kneaded at a temperature equal to or higher than a melting point thereof to extrude a film formed of the raw material polyolefin from a die attached to a tip of the extruder. The extruder used is not limited. For example, any of a single-screw extruder, a twin-screw extruder, a tandem extruder can be used as the extruder. Any die can be used if the die to be used is used for film shaping. For example, various kinds of T dies can be used as the die. A thickness and a shape of the original film are not particularly limited. A ratio (draft ratio) of thickness of the original film to a die lip clearance is preferably 100 or more, and further preferably 150 or more. A thickness of the original film is preferably 10 to 200 micrometers, and further preferably 15 to 100 micrometers.

(Heat treatment step)

The heat treatment step is a step of applying heat treatment to the original film after completion of the film formation step. Predetermined tension in a length direction is applied to the original film at a temperature lower by 5 to 65°C lower, and preferably 10 to 25°C than the melting point of the raw material polyolefin. Preferred tension has magnitude in which a length of the original film is more than 1.0 times and 1.1 times or less.

(Cold stretching step)

The cold stretching step is a step of stretching the original film after completion of the heat treatment step, at a comparatively low temperature. A stretching temperature is -5°C to 45°C, and preferably 5°C to 30°C. A stretching ratio is 1.0 to 1.1, preferably 1.00 to 1.08, and further preferably 1.02 or more and less than 1.05 in a length direction. However, the stretching ratio is larger than 1.0. A stretching means is not limited. A publicly-known means such as a roll stretching method and a tenter stretching method can be used. The number of steps of stretching can be arbitrarily set. One-step stretching may be applied, and the film may be stretched in two or more steps through a plurality of rolls. Molecules of a polypropylene-based polymer constituting the original film are oriented in the cold stretching step. As a result, a stretched film having a lamella portion in which a molecular chain is dense and a region (craze) in which the molecular chain between the lamellas is rare can be obtained.

(Hot stretching step)

The hot stretching step is a step of stretching the stretched film after completion of the cold stretching step, at a comparatively high temperature. A stretching temperature is a temperature lower by 5 to 65°C than a melting point of the polypropylene-based polymer, and preferably lower by 10 to 45°C than the melting point of the raw material polyolefin-based polymer. A stretching ratio is 1.5 to 4.5, and preferably 2.0 to 4.0 in a length direction. A stretching means is not limited. A publicly-known means such as a roll stretching method and a tenter stretching method can be used. The number of steps of stretching can be arbitrarily set. One-step stretching mat be applied, and the film may be stretched in two or more steps through a plurality of rolls. The craze formed in the cold stretching step is stretched in the hot stretching step, and as a result, a void is formed in the stretched film.

(Relaxing step)

The relaxing step is a step of relaxing the film in order to prevent shrinkage of the stretched film after completion of the hot stretching step. A relaxing temperature is a temperature slightly higher than the stretching temperature in the hot stretching step and generally higher by 0 to 20°C than the temperature. A degree of relaxation is adjusted to be finally 0.7 to 1.0 times in a length of the stretched film after completion of the hot stretching step. Thus, the substrate film used in the invention is completed.

A thickness of the final substrate film is 15 to 30 micrometers, and preferably 15 to 25 micrometers.

**Heat-resistant layer**

The heat-resistant layer is formed in at least on one surface of the substrate film described above. The heat-resistant layer is formed by applying a heat-resistant layer agent containing the inorganic heat-resistant particles, the organic solvent-soluble binder and the organic solvent to the substrate film, and drying and solidifying the applied liquid.

(Inorganic heat-resistant particle)

As the inorganic heat-resistant particles, an inorganic substance having a high melting point, high insulation and electrochemical stability can be utilized. Such inorganic heat-resistant particles are inorganic particles having a melting point of 200°C or higher and generally called an inorganic filler.

In the invention, metal oxides such as alumina, silica, titania, zirconia, magnesia and barium titanate, metal hydroxides such as aluminum hydroxide and magnesium hydroxide, and clay-based minerals such as boehmite, talc, kaoline, zeolite, apatite, halloysite, pyrophyllite, montmorillonite, sericite, mica, amesite, bentonite, calcium silicate and magnesium silicate are used as the inorganic heat-resistant particles. A mixture formed of a plurality of inorganic heat-resistant particles can also be used. Preferred inorganic heat-resistant particles are one or more kinds selected from alumina, silica, boehmite and titania.

The inorganic heat-resistant particles are used by mixing small particles F (a) having an average particle size less than 0.2 micrometer, and large particles F(b) having an average particle size of 0.2 micrometer or more.

A primary particle diameter of the inorganic heat-resistant particles is 5 nanometers to 100 nanometers, and preferably 10 nanometers to 50 nanometers. The primary particle diameter means a particle size in a minimum unit of the inorganic heat-resistant particles, and the average particle size described above means a secondary particle diameter of a cluster configured of an aggregate in which the primary particles are aggregated. Thermal shrinkage can be suppressed to a minimum while maintaining smoothness by adjusting the primary particle diameter to the range described above, and adhesion to the substrate film can also be significantly improved. Specific examples of a technique for measuring the primary particle diameter include measurement of a specific surface area by a gas adsorption method, or the primary particle diameter can be confirmed by measuring the diameter from an image by a scanning electron microscope (SEM). Specific examples of a method of measuring the average particle size include a light scattering method, an image analysis method and a sedimentation method. The average particle size in the invention is expressed in terms of a value of a particle size (median size) in which an accumulation frequency of the number of particles becomes 50% by measuring particle diameters using a laser diffraction/scattering particle size distribution analyzer.

In the invention, the number of contact points of the inorganic heat-resistant particles with a counterpart material during contacting with the counterpart material can be reduced by simultaneously using small particles F(a) having an average particle size less than 0.2 micrometer and large particles F(b) having an average particle size of 0.2 micrometer or more, and therefore the frictional resistance on a side of the heat-resistant layer can be reduced to provide the organic-inorganic composite membrane with excellent smoothness. Moreover, the air permeability of the heat-resistant layer can also be maintained, and therefore the organic-inorganic composite membrane excellent in adhesion with the substrate film can be obtained. From a viewpoint of adhesion and maintenance of heat resistance, an average particle size of small particles F(a) is preferably 0.005 to 0.18 micrometer, and further preferably 0.05 to 0.15 micrometer. Moreover, from a viewpoint of satisfying both smoothness and adhesion, an average particle size of large particles F(b) is preferably 0.2 to 0.5 micrometer, and further preferably 0.2 to 0.3 micrometer.

As mixing proportion of small particles F(a) and large particles F(b), small particles F(a) are preferably contained in an amount larger than an amount of large particles F(b). Specifically, both are blended preferably to be 5% by weight or more and less than 50% by weight in a weight fraction of large particles F(b) based on the total weight of the inorganic heat-resistant particles, and large particles F(b) are blended further preferably to be 5 to 30% by weight in a weight fraction of large particles F(b) based on the total weight of the inorganic heat-resistant particles. The organic-inorganic composite membrane can have sufficient smoothness by adjusting the mixing proportion of large particles F(b) to the range described above, and adhesion with the substrate film can be sufficiently ensured by mainly blending small particles (a).

In the invention, as the inorganic heat-resistant particles, inorganic heat-resistant particles having a spherical shape or a substantially spherical shape close to the spherical shape are preferably mainly used. The organic-inorganic composite membrane having superb smoothness can be obtained by using the spherical or substantially spherical inorganic heat-resistant particles. As a result of diligently continuing to conduct study by the present inventors, when both are compared at the same particle size, realization of a lower static coefficient of friction of the heat-resistant layer can be confirmed in the spherical or substantially spherical inorganic heat-resistant particles in comparison with an amorphous or square-shaped inorganic filler.

Specific examples of a method of qualitatively or quantitatively confirming a content of the inorganic heat-resistant particles used in the invention include a method to conducting a surface analysis of inorganic fine particles in an organic-inorganic composite membrane surface layer according to a fluorescent X-ray analysis, X-ray photoelectron spectrometry or the like; and a method of conducting an elemental analysis according to a technique such as the surface analysis described above, an atomic absorption method and a high-frequency inductively coupled plasma (ICP) emission spectrometry after dissolving a thermoplastic resin constituting the organic-inorganic composite membrane by using a solvent capable of dissolving the resin, and separating the inorganic heat-resistant particles contained therein by a technique such as filtration and centrifugation. The content can be obviously confirmed by any other technique without being limited to the methods exemplified above. Further, whether a material is one kind of inorganic heat-resistant particles contained therein or is a mixture of a plurality of inorganic heat-resistant particles can be distinguished by simultaneously using the techniques, and therefore such a case is preferred.

(Binder)

The binder functions as a binding agent for a substrate and the inorganic heat-resistant particles. The binder of the invention is the organic solvent-soluble binder. As the organic solvent-soluble binder, various resins such as a polyolefin, a fluorine-containing resin, rubber, elastomer and acetylcelluloses can be used. A preferred binder thereamong is a fluorine-containing resin such as polytetrafluoroethylenes (PTFE), ethylene-tetrafluoroethylene (ETFE), polyvinyl fluoride (PVF), polychlorotrifluoroethylene (CTFE) and polyvinylidene fluoride (PVDF) or a copolymer thereof, and a further preferred binder is polyvinylidene fluoride (PVDF) and a copolymer thereof.

An amount ratio of the inorganic heat-resistant particles to the binder (inorganic heat-resistant particles : binder, a weight ratio) is generally in the range of (40 : 60) to (98 : 2), preferably (50 : 50) to (95 : 5), and further preferably (60 : 40) to (90 : 10). Air permeability of the organic-inorganic composite membrane can be maintained if a mixing ratio of the inorganic heat-resistant particles and the binder is in the range described above.

(Organic solvent)

The organic solvent is ordinarily added to the heat-resistant layer agent forming the heat-resistant layer in order to uniformly mix and disperse the inorganic heat-resistant particles and the binder thereinto, and in order to improve coatability to the substrate film. As the organic solvent, a polar organic solvent such as acetone, N-methylpyrrolidone, dimethylacetamide, dimethylformamide and dimethyl sulfoxide can be used. From a viewpoint of the coatability, a blending amount of the organic solvent is preferably 30 to 95% by weight, and further preferably 50 to 90% by weight in the heat-resistant layer agent.

(Any other additive)

An additive such as a dispersant and an antibacterial agent can be blended in the heat-resistant layer agent, when necessary, in addition to the inorganic heat-resistant particles and the binder.

Specific examples of the dispersant include ammonium polyacrylate. Specific examples of the antibacterial agent include benzalkonium chloride and cetylpyridinium chloride.

Upon coating the heat-resistant layer agent prepared by adding and mixing the inorganic heat-resistant particles, the organic solvent-soluble binder and the organic solvent to the substrate film, the heat-resistant layer is formed in a state in which the materials described above are mixed on the substrate film, but not only the inorganic heat-resistant particles but also the binder lead to reduction of smoothness. Specific examples of the factor include a kind and a ratio of the binder, and characteristics of a molecular weight. However, the organic solvent capable of dissolving the binder is used, and the uniformly dispersed heat-resistant layer agent is used in the invention, and therefore an excess binder that is not used for adhesion between the particles or between the particles and the substrate is permeated and unified into the substrate film through the organic solvent. Thus, the surface of the heat-resistant layer is substantially configured of the inorganic heat-resistant particles, and reduction of smoothness derived from the binder can be significantly suppressed.

(Preparation of heat-resistant layer agent)

The heat-resistant layer agent is prepared by mixing the raw materials such as the inorganic heat-resistant particles, the binder, the organic solvent and the additive as described above, and stirring the resulting mixture. As long as the inorganic heat-resistant particles are uniformly dispersed in the heat-resistant layer agent, a means of mixing and stirring is not limited. A homogenizer, a bead mill and a jet mill are ordinarily used.

**Production of organic-inorganic composite membrane**

The heat-resistant layer agent is coated onto at least one surface of the substrate film. A coating means is not limited. For example, a means of applying a liquid material in a flat film form, such as a gravure coater, a micro gravure coater, a die coater and a knife coater is applied, any means can be used. Then, the substrate film with the heat-resistant layer agent is conveyed to a drier to dry and solidify the heat-resistant layer agent to form the heat-resistant layer.
A drying temperature is adjusted to a temperature at which thermal degradation of the substrate film is suppressed even though the organic solvent in the heat-resistant layer agent is volatilized. The drying temperature is preferably 70°C or higher, and further preferably 80 to 120°C. The heat-resistant layer agent is solidified in association with drying, and the heat-resistant layer is completed. A thickness of the heat-resistant layer agent provided on one surface of the substrate film is ordinarily in the range of 1 to 10 micrometers, preferably in the range of 1.5 to 6.0 micrometers, and further preferably in the range of 2.0 to 5.0 micrometers.

**Organic-inorganic composite membrane**

In the organic-inorganic composite membrane of the invention, the heat-resistant layer is provided on at least one surface of the substrate film according to the method described above by using the substrate film and the heat-resistant layer agent obtained under the conditions described above. In the invention, the organic-inorganic composite membrane preferably satisfies the following conditions (B) and conditions (C), and further preferably satisfies conditions (A) to conditions (C) as described below.

**Conditions (A)**

The heat-resistant layer of the invention preferably satisfies the following conditions (A):

$$\text{conditions (A):} \ \mu s \leq 0.40$$

wherein, $\mu s$ is a static coefficient of friction and expressed in terms of a value measured according to the method in accordance with the provisions of JIS K 7125.
Conditions (A) represent the preferred range of smoothness of the heat-resistant layer, and extraction of a center core after winding becomes satisfactory by satisfying conditions (A).

**Conditions (B)**

The heat-resistant layer of the invention preferably satisfies the following conditions (B):

$$\text{conditions (B):} \ 12.74 \leq b$$

wherein, b denotes peel strength (N) of a heat-resistant layer from a substrate film as measured according to the measuring method described below.
Conditions (B) represent the preferred range of adhesion between the substrate film and the heat-resistant layer, and the heat-resistant layer becomes satisfactory by satisfying conditions (B) without dropping of the heat-resistant layer in a step of producing a battery.
The measuring method for peel strength b: operation is performed in the order of the following (1), (2), (3) and (4):

(1) a pressure sensitive adhesive double coated tape is pasted onto a heat-resistant layer of an organic-inorganic composite membrane;

(2) kraft paper is pasted on a surface without adhesion with the heat-resistant layer of the pressure sensitive adhesive double coated tape;

(3) each end of the organic-inorganic composite membrane and the kraft paper is clamped with a chuck of a tensile tester; and

(4) the chuck is pulled away at a tensile rate of 500 millimeters per minute by using the tensile tester, and maximum stress (N) at causing interfacial peeling of the heat-resistant layer from the substrate film is taken as peel strength b.

Peel strength b preferably satisfies an expression: $12.74 \leq b$, further preferably satisfies an expression: $14.7 \leq b$, still further preferably satisfies an expression: $24.5 \leq b$, and most preferably satisfies an expression: $29.4 \leq b$.

**Conditions (C)**

The heat-resistant layer of the invention preferably satisfies the following conditions (C):

$$\text{conditions (C): } c \leq 20$$

wherein, c denotes an air-permeability change rate (%) to be determined by the following formula:

$$\text{air-permeability change rate (\%)} = |(\text{air permeability of organic-inorganic composite membrane}) - (\text{air permeability of substrate film})| / (\text{air permeability of substrate film}) \times 100.$$

Conditions (C) represent a degree of change of air permeability of the substrate film and means that the air permeability is within a change in the range having no problem by formation of the heat-resistant layer by satisfying conditions (C).

Then, 0% in c means that the air permeability shown by the substrate film alone is not changed by formation of the heat-resistant layer, which represents that microporous characteristics of the substrate film can be expected to be maintained also in the organic-inorganic composite membrane. Air-permeability change rate c preferably satisfies an expression: $c \leq 15$, and further preferably satisfies an expression: $c \leq 10$.

A completed organic-inorganic composite membrane is ordinarily prepared as the original roll in which a film having a length of several ten meters to several thousand meters is wound around one winding core. When the organic-inorganic composite membrane of the invention is processed into a separator, the organic-inorganic composite membrane is processed into a product roll in which the organic-inorganic composite membrane is cut into a width suitable for the separator in which the organic-inorganic composite membrane is used, when necessary, and then the cut membrane is wound around a new winding core. Then, the roll of the organic-inorganic composite membrane is packed, stored and shipped, and is processed into a desired product.

When the organic-inorganic composite membrane of the invention is used in a heat-resistant multilayer separator, heat resistance of the organic-inorganic composite membrane is desired to be higher. When the heat resistance of a separator material is evaluated using thermal shrinkage (%) at 150°C used in Examples described later, the thermal shrinkage of the organic-inorganic composite membrane of the invention is 10% or less. The thermal shrinkage of the above level is within the allowable range for the separator material.

**Examples**

**Example 1**

(Production of substrate film)

(Raw material) As a raw material, a propylene homopolymer having 0.5 g/10 min in a melt mass flow rate (MFR) measured in accordance with JIS K6758 (230°C, 21.18 N) and 165°C in a melting point was used.

(Film formation) A raw material prepared by melt-kneading in a single-screw extruder was extruded from a T-die at a draft ratio of 206 to produce an original film.
(Heat treatment) The original film was cold-stretched 1.03 times at 30°C in a length direction.
(Hot stretching) The stretched film obtained was hot-stretched 2.8 times at 230°C in the length direction.
(Relaxation) The stretched film obtained was relaxed to be about 90% of an original length in the length of the stretched film.

Thus, a 21 $\mu$m-thick substrate film was obtained. Air permeability of the substrate film obtained was 150 sec/100 mL.

(Preparation of heat-resistant layer agent)

As inorganic heat-resistant particles (small particles) F(a), alumina (AEROXIDE AluC, average particle size: 0.1 $\mu$m) was used, and as inorganic heat-resistant particles (large particles) F(b), alumina (Denki Kagaku Kogyo K.K., ASFP-20, average particle size: 0.2 $\mu$m, spherical particles) was used. As a binder, a vinylidene fluoride copolymer (abbreviation "co-PVDF") (Kyner 2801, made by Arkema S.A.) was used.
Then, 80 g of small particles F(a) and 80 g of large particles F(b) were added to 880 g of N-methylpyrrolidone (NMP) being an organic solvent, respectively, together with 40g of the binder, and the resulting mixture was stirred at a rotational speed of 500 rpm for 1 hour by using Disper. Slurry obtained was processed once at a processing pressure of 200 MPa by using a high-pressure processor (Nanovater, made by Yoshida Kikai Co., Ltd.), and mixed. Then, a heat-resistant layer agent was obtained by mixing and stirring both to be 9 in a weight fraction of large particles F(b) (% by weight: F(b) / [F(a) + F(b)] $\times$ 100).

(Production of organic-inorganic composite membrane)

The heat-resistant layer agent was coated onto one surface of the substrate film by using a gravure coater. The substrate film with the heat-resistant layer agent was conveyed into a drying oven at a temperature of 95°C to dry and solidify the heat-resistant layer agent. A thickness of the heat-resistant layer was 3.1 $\mu$m, and a thickness of the film as a whole was 24.1 $\mu$m. Thus, an organic-inorganic composite membrane was obtained.

(Evaluation according to conditions (A))

In the organic-inorganic composite obtained, a static coefficient of friction ($\mu$s) on a surface of the heat-resistant layer was measured by the method in accordance with the provisions of JIS K 7125. Then, $\mu$s when a surface on a side of the heat-resistant layer was applied as a surface to be measured and a sliding piece was moved in a TD direction was 0.22, and conditions (A) described above were satisfied.

(Evaluation according to conditions (B))

A small piece having a dimension of 2 cm (crosswise direction) $\times$ 7 cm (length direction)) was cut out from the organic-inorganic composite membrane obtained. A 2-cm piece of a pressure sensitive adhesive double coated tape (PPS-10, width: 1 cm, made by Sumitomo 3M Ltd.) was pasted onto the heat-resistant layer of the small piece described above. On a surface without adhesion with the heat-resistant layer of the pressure sensitive adhesive double coated tape, a small piece of kraft paper having a dimension of 2 cm (width) $\times$ 7 cm (length) was pasted. Each of an end of the organic composite membrane and an end of the kraft paper was clamped with a chuck of a tensile tester. The chuck was pulled at a tensile rate of 500 mm/minute, and maximum stress when the heat-resistant layer and the substrate film caused interfacial peeling was obtained as peel strength b (N) of the heat-resistant layer from the substrate film. In the organic-inorganic composite membrane obtained, b was 15.7 N. In the organic-inorganic composite membrane obtained, conditions (B) described above were satisfied.

(Evaluation according to conditions (C))

Air permeability of the organic-inorganic composite obtained was 140 sec/100 mL. The above value represented a value close to air permeability of the substrate film. Accordingly, an air-permeability change rate c (%) in conditions (C) described above was 7. In the organic-inorganic composite membrane, conditions (C) were satisfied.

(Evaluation of heat resistance)

Thermal shrinkage of the organic-inorganic composite membrane obtained was measured. A square-shaped small piece having a dimension of 7 cm × 7 cm was cut out from the organic-inorganic composite membrane obtained. As a reference point set consisting of two points spaced by 2.5 cm in a length direction, three sets were fixed in arbitrary places on a surface of the small piece. Three sets were fixed also in a crosswise direction in a similar manner. The small piece was allowed to stand in a constant-temperature chamber at 150 °C for 2 hours in a state of applying no load thereto, and then a distance between two points in each reference point set was measured. In each of three reference point sets in the length direction, thermal shrinkage (%) was calculated from a difference of a distance between two points before heating from a distance between two points after heating. An average value for the three sets was taken as thermal shrinkage (%) in the length direction. Thermal shrinkage (%) in the crosswise direction was determined also for the three reference point sets in the width direction in a similar manner. A larger value in the thermal shrinkage (%) in the length direction and the thermal shrinkage (%) in the crosswise direction was taken as thermal shrinkage (%) at 150°C of the organic-inorganic composite membrane. In the organic-inorganic composite membrane in Example 1, the thermal shrinkage at 150°C was 9%.

Table 1 shows a static coefficient of friction ($\mu$s) in conditions (A), peel strength b of a heat-resistant layer from a substrate film in conditions (B), an air-permeability change rate c in conditions (C), heat resistance and so forth of the organic-inorganic composite of the organic-inorganic composite membrane obtained in Example 1.

**Example 2**

An organic-inorganic composite membrane was obtained in a manner similar to Example 1 except that a heat-resistant layer agent was prepared to be 17% by weight in a weight fraction of large particles F(b).

**Example 3**

An organic-inorganic composite membrane was obtained in a manner similar to Example 1 except that a heat-resistant layer agent was prepared to be 25% by weight in a weight fraction of large particles F(b).

**Example 4**

An organic-inorganic composite membrane was obtained in a manner similar to Example 1 except that a heat-resistant layer agent was prepared to be 48% by weight in a weight fraction of large particles F(b).

**Example 5**

An organic-inorganic composite membrane was obtained in a manner similar to Example 1 except that a heat-resistant layer agent was prepared to be 5% by weight in a weight fraction of F (b) by using alumina (SG-ALO100UP, average particle size: 0.2 $\mu$m, amorphous particles) as large particles F(b).

**Comparative Example 1**

(Production of substrate film)

Stretching conditions in Example 1 were adjusted to be 16 $\mu$m in a thickness of a substrate film.

(Preparation of heat-resistant layer agent)

As inorganic heat-resistant particles, boehmite (C01, made by TAIMEI CHEMICALS CO., LTD., average particle size: 0.1 $\mu$m, square-shaped particles) was used, and as a binder, a vinylidene fluoride copolymer (abbreviation "co-PVDF") (Kyner 2801, made by Arkema S.A.) was used. The inorganic heat-resistant particles (weight concentration: 8%) and the binder (weight concentration: 4%) were added to N-methylpyrrolidone (NMP) being a solvent, and the resulting mixture was stirred at a rotational speed of 500 rpm for 1 hour by using Disper. Slurry obtained was processed five times at a processing pressure of 200 MPa by using a high-pressure processor (Nanovater, made by Yoshida Kikai Co., Ltd.) and mixed to obtain a heat-resistant layer agent.

(Production of organic-inorganic composite membrane)

The heat-resistant layer agent was coated onto one surface of the substrate film by using a gravure coater. The substrate film with the heat-resistant layer agent was conveyed into a drying oven at a temperature of 95°C to dry and solidify the heat-resistant layer agent. A thickness of the heat-resistant layer was 3.1 $\mu$m, and a thickness of the film as a whole was 19.1 $\mu$m.

(Evaluation according to conditions (A))

When a static coefficient of friction ($\mu$s) on a surface of the heat-resistant layer was measured on the organic-inorganic composite obtained, by the method in accordance with the provisions of JIS K 7125 $\mu$s was 0.65, and conditions (A) described above were unable to be satisfied. When the composite membrane was used for preparation of a battery, poor extraction of a center core was caused after winding, and stable production of the battery became difficult.

**Comparative Example 2**

(Production of substrate film)

A substrate film was prepared under conditions similar to the conditions in Example 1.

(Preparation of heat-resistant layer agent)

A heat-resistant layer agent was prepared under conditions similar to the conditions in Example 1 except that only ASFP-20 was used as inorganic heat-resistant particles.

(Production of organic-inorganic composite membrane)

The heat-resistant layer agent was coated onto one surface of the substrate film by using a gravure coater. A thickness of the heat-resistant layer was 2.5 $\mu$m, and a thickness of the film as a whole was 23.5 $\mu$m. In the composite membrane obtained, while conditions A were satisfied, peel strength of conditions B was not satisfied, and dropping of the heat-resistant layer was frequently caused in a step of producing a battery.

**Comparative Example 3**

A substrate film was prepared under conditions similar to the conditions in Example 1.

(Preparation of heat-resistant layer agent)

A heat-resistant layer agent was prepared under conditions similar to the conditions in Example 1 except that only SG-ALO100UP was used as inorganic heat-resistant particles.

(Production of organic-inorganic composite membrane)

The heat-resistant layer agent was coated onto one surface of the substrate film by using a gravure coater. A thickness of the heat-resistant layer was 2.5 $\mu$m, and a thickness of the film as a whole was 23.5 $\mu$m. While conditions A were satisfied in the composite membrane obtained, peel strength in conditions B was not satisfied, and dropping of the heat-resistant layer was frequently caused in a step of producing a battery.

A static coefficient of friction ($\mu$s) in conditions (A), peel strength b of the substrate film and the heat-resistant layer in conditions (B), an air-permeability change rate c in conditions (C), heat resistance and so forth of the organic-inorganic composites obtained in Examples 2 to 5 and Comparative Examples 1 to 3 were measured under the same conditions as in Example 1. Table 1 shows the results.

**Table 1**

| | Heat-resistant layer agent | | | | | | | | | | Heat-resistant layer | | Substrate (Polypropylene microporous membrane) | | Organic-inorganic composite membrane | | | | Conditions (C) |
|---|---|---|---|---|---|---|---|---|---|---|---|---|---|---|---|---|---|---|---|
| | Inorganic heat-resistant particles F(a) | | | | Inorganic heat-resistant particles F(b) | | | | F(b) Weight fraction (% by weight) F(b) / [F(a) + F(b)] × 100 | Binder | Thickness (µm) | Conditions (A) Static coefficient of friction (µs) | Thickness (µm) | Air permeability (sec/100 mL) (1) | Thickness (µm) | Air permeability (sec/100 mL) (2) | Heat resistance (thermal shrinkage at 150℃) (%) | Conditions (B) Peel strength (N) | Air-permeability change rate (%) [Absolute value of {(2) - (1)}] / (1) × 100 |
| | Kind | Product Name | Particle size (µm) | Shape | Kind | Product name | Particle size (µm) | Shape | | | | | | | | | | | |
| Example 1 | Alumina | AEROXIDE AluC | Average 0.1 | Substantially spherical | Alumina | ASFP-20 | Average 0.2 | Spherical | 9 | co-PVDF | 3.1 | 0.22 | 21.0 | 150 | 24.1 | 140 | 9 | 15.7 | 7 |
| Example 2 | Alumina | AEROXIDE AluC | Average 0.1 | Substantially spherical | Alumina | ASFP-20 | Average 0.2 | Spherical | 17 | co-PVDF | 3.5 | 0.36 | 21.0 | 150 | 24.5 | 160 | 8 | 14.4 | 7 |
| Example 3 | Alumina | AEROXIDE AluC | Average 0.1 | Substantially spherical | Alumina | ASFP-20 | Average 0.2 | Spherical | 25 | co-PVDF | 3.2 | 0.36 | 21.0 | 150 | 24.2 | 140 | 9 | 16 | 7 |
| Example 4 | Alumina | AEROXIDE AluC | Average 0.1 | Substantially spherical | Alumina | ASFP-20 | Average 0.2 | Spherical | 48 | co-PVDF | 2.5 | 0.35 | 21.0 | 150 | 23.5 | 140 | 10 | 13.1 | 7 |
| Example 5 | Alumina | AEROXIDE AluC | Average 0.1 | Substantially spherical | Alumina | SG-ALO100UP | Average 0.2 | Amorphous | 5 | co-PVDF | 3.5 | 0.26 | 21.0 | 150 | 24.5 | 150 | 8 | 19.6 | 0 |
| Comparative Example 1 | Boehmite | TAIMEI CHEMICALS C01 | Average 0.1 | Square | - | - | - | - | - | co-PVDF | 3.1 | 0.65 | 16.0 | 180 | 19.1 | 250 | 4 | 24.5 | 39 |
| Comparative Example 2 | - | - | - | - | Alumina | ASFP-20 | Average 0.2 | Spherical | - | co-PVDF | 2.5 | 0.24 | 21.0 | 150 | 23.5 | 130 | 16 | 1.9 | 13 |
| Comparative Example 3 | - | - | - | - | Alumina | SG-ALO100UP | Average 0.2 | Amorphous | - | co-PVDF | 2.5 | 0.30 | 21.0 | 150 | 23.5 | 140 | 17 | 0.9 | 7 |

13

The organic-inorganic composite membranes obtained in Examples 1 to 5 each satisfy three conditions of conditions (A): smoothness, conditions (B): high adhesion between the substrate film and the heat-resistant layer, and conditions (C) : a small change of air permeability of the substrate film. Furthermore, the organic-inorganic composite membranes obtained in Examples 1 to 5 also have the heat resistance required for the separator material. In contrast, the organic-inorganic composite membranes obtained in Comparative Examples 1 to 3 have poor balance among conditions (A), (B) and (C) described above. The organic-inorganic composite membrane obtained in Comparative Example 1 is poor in smoothness, and the organic-inorganic composite membranes obtained in Comparative Examples 2 and 3 are low in adhesion and also poor in heat resistance that is basic performance required for the separator material.

**Industrial Applicability**

An organic-inorganic composite membrane which is successfully selectively produced according to the invention is found to result in having all properties of smoothness, adhesion between a substrate film and a heat-resistant layer, and maintenance of microporous characteristics of the substrate film, all being required for a separator material in recent years, while maintaining heat resistance required for the separator material. Such an organic-inorganic composite membrane of the invention is particularly useful as the separator material.

**Claims**

1. An organic-inorganic composite membrane comprising a heat-resistant layer containing inorganic heat-resistant particles and an organic solvent-soluble binder on at least one surface of a substrate film formed of a microporous membrane made of polyolefin, wherein the inorganic heat-resistant particles contain small particles F (a) having an average particle size less than 0.2 micrometer, and large particles F(b) having an average particle size of 0.2 micrometer or more.

2. The organic-inorganic composite membrane according to claim 1, wherein a weight fraction of large particles F(b) based on the total weight of the inorganic heat-resistant particles is 5% by weight or more and less than 50% by weight.

3. The organic-inorganic composite membrane according to claim 1 or 2, satisfying the following conditions (B) and conditions (C):

$$\text{conditions (B): } 12.74 \leq b$$

wherein, b denotes peel strength (N) of a heat-resistant layer from a substrate film to be obtained according to the following measuring method:
the measuring method of peel strength b: operation is performed in the order of the following (1), (2), (3) and (4):

(1) a pressure sensitive adhesive double coated tape is pasted onto a heat-resistant layer of an organic-inorganic composite membrane;
(2) kraft paper is pasted onto a surface without adhesion with the heat-resistant layer of the pressure sensitive adhesive double coated tape;
(3) each end of the organic-inorganic composite membrane and the kraft paper is clamped with a chuck of a tensile tester; and
(4) the chuck is pulled away at a tensile rate of 500 millimeters per minute by using the tensile tester, and maximum stress (N) at causing interfacial peeling of the heat-resistant layer from the substrate film is taken as peel strength b; and

$$\text{conditions (C): } c \leq 20$$

wherein, c denotes an air-permeability change rate (%) to be determined by the following formula:

```
air-permeability change rate (%) = |(air permeability of
organic-inorganic composite membrane) - (air permeability of substrate
film)| / (air permeability of substrate film) × 100.
```

4. The organic-inorganic composite membrane according to any one of claims 1 to 3, wherein the microporous membrane made of polyolefin is composed of a polymer obtained by polymerizing a monomer mainly composed of olefin.

5. The organic-inorganic composite membrane according to claim 4, wherein the polymer obtained by polymerizing the monomer mainly composed of olefin is a propylene homopolymer or a polymer obtained by copolymerizing propylene and at least one kind selected from ethylene and an $\alpha$-olefin having 4 to 8 carbons and mainly composed of propylene.

6. The organic-inorganic composite membrane according to any one of claims 1 to 5, wherein the inorganic heat-resistant particles are at least one kind selected from silica, boehmite, alumina and titania.

7. The organic-inorganic composite membrane according to any one of claims 1 to 6, wherein the organic solvent-soluble binder is a fluorine-containing resin.

8. A method for producing the organic-inorganic composite membrane according to any one of claims 1 to 7, comprising a step of coating a heat-resistant layer agent containing inorganic heat-resistant particles and an organic solvent-soluble binder onto at least one surface of a substrate film formed of a microporous membrane made of polyolefin, and drying and solidifying the resulting material and providing a heat-resistant layer.

9. A multilayer heat-resistant separator material, formed of the organic-inorganic composite membrane according to any one of claims 1 to 7.

## INTERNATIONAL SEARCH REPORT

International application No.

PCT/JP2016/081689

### A. CLASSIFICATION OF SUBJECT MATTER
*B32B5/18*(2006.01)i, *B32B27/20*(2006.01)i, *H01M2/16*(2006.01)i

According to International Patent Classification (IPC) or to both national classification and IPC

### B. FIELDS SEARCHED

Minimum documentation searched (classification system followed by classification symbols)
B32B1/00-43/00, H01M2/14-2/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2013/146342 A1 (Mitsubishi Plastics, Inc.), 03 October 2013 (03.10.2013), claims; paragraphs [0033], [0064] to [0072], [0077] & JP 5344107 B1 & US 2014/0193692 A1 paragraphs [0042], [0097] to [0113] & CN 103717390 A & KR 10-2014-0076649 A | 1-9 |
| Y | WO 2008/123331 A1 (Sumitomo Chemical Co., Ltd.), 16 October 2008 (16.10.2008), claims; page 3, line 15 to page 4, line 4; page 6, lines 5 to 16; page 10, lines 21 to 24 & JP 2008-270178 A & US 2010/0112432 A1 paragraphs [0023], [0029], [0030], [0045] & EP 2144311 A1 & KR 10-2009-0122395 A & CN 101641808 A & TW 200849696 A | 1-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 November 2016 (15.11.16) | 06 December 2016 (06.12.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2016/081689

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2014/030507 A1  (JNC Corp.),<br>27 February 2014 (27.02.2014),<br>claims; examples<br>& JP 5741982 B           & US 2015/0221917 A1<br>claims; examples<br>& EP 2889134 A1          & KR 10-2015-0046127 A<br>& CN 104582949 A         & TW 201412384 A | 1-9 |
| A | WO 2012/018133 A1  (Sumitomo Chemical Co.,<br>Ltd.),<br>09 February 2012 (09.02.2012),<br>claims; examples<br>& JP 2012-54229 A        & JP 2016-40784 A<br>& CN 103026531 A         & KR 10-2014-0003384 A<br>& TW 201220580 A | 1-9 |
| A | JP 2014-180821 A  (Sekisui Chemical Co., Ltd.),<br>29 September 2014 (29.09.2014),<br>claims; examples<br>(Family: none) | 1-9 |
| A | JP 2010-123383 A  (Teijin Ltd.),<br>03 June 2010 (03.06.2010),<br>claims<br>(Family: none) | 1-9 |
| A | JP 2013-14017 A  (Sumitomo Chemical Co., Ltd.),<br>24 January 2013 (24.01.2013),<br>claims<br>(Family: none) | 1-9 |
| A | WO 2013/073011 A1  (Toyota Motor Corp.),<br>23 May 2013 (23.05.2013),<br>claims<br>& US 2014/0272534 A1<br>claims<br>& CN 103947008 A        & KR 10-2014-0096358 A | 1-9 |
| A | WO 2012/165580 A1  (Mitsubishi Plastics, Inc.),<br>06 December 2012 (06.12.2012),<br>claims<br>& JP 5298247 B2          & US 2014/0099530 A1<br>claims<br>& CN 102917876 A         & KR 10-2013-0014052 A | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008143005 A